# EUROPÄISCHE PATENTANMELDUNG

(11) **EP 4 015 059 A1**
(43) Veröffentlichungstag der Anmeldung: **22.06.2022**
(21) Anmeldenummer: 21213726.9
(22) Anmeldetag: 10.12.2021
(51) Int. Cl.: B01D 3/10, B01D 5/00, B01D 3/42

(54) **VERFAHREN UND VORRICHTUNG ZUM REDUZIEREN DES FLÜSSIGKEITSGEHALTS VON FESTSTOFF-FLÜSSIGKEITS-GEMISCHEN ODER ZUM TRENNEN VON FLÜSSIGKEITS-GEMISCHEN MITTELS VERDAMPFENS VON FLÜSSIGKEIT**

(30) Priorität: 15.12.2020 DE 102020133482
(71) Anmelder: Börger GmbH, 46325 Borken-Weseke (DE)
(72) Erfinder: Börger, Alois, 46325 Borken-Weseke (DE)
(74) Vertreter: Schulze Horn, Kathrin

(57) **Zusammenfassung**

Die vorliegende Erfindung betrifft ein Verfahren zum Reduzieren des Flüssigkeitsgehalts von Feststoff-Flüssigkeits-Gemischen oder zum Trennen von Flüssigkeits-Gemischen mittels Verdampfens von Flüssigkeit, wobei das Feststoff-Flüssigkeits-Gemisch oder Flüssigkeits-Gemisch in einem Gemischbehälter (2) unter Vakuum gesetzt wird und wobei verdampfte Flüssigkeit in einem dem Gemischbehälter (2) nachgeschalteten Kondensator (4) wieder verflüssigt wird. Dabei wird das Vakuum in dem Gemischbehälter (2) durch den Kondensator (4) hindurch mittels einer flüssigkeitsgedichteten Drehkolbenpumpe (7) erzeugt.

Außerdem betrifft die Erfindung eine Vorrichtung (1) zum Reduzieren des Flüssigkeitsgehalts von Feststoff-Flüssigkeits-Gemischen oder zum Trennen von Flüssigkeits-Gemischen mittels Verdampfens von Flüssigkeit.

Zeichnungsfigur zur Zusammenfassung: Figur 1

## Beschreibung

Die vorliegende Erfindung betrifft ein Verfahren zum Reduzieren des Flüssigkeitsgehalts von Feststoff-Flüssigkeits-Gemischen oder zum Trennen von Flüssigkeits-Gemischen mittels Verdampfens von Flüssigkeit, wobei das Feststoff-Flüssigkeits-Gemisch oder Flüssigkeits-Gemisch in einem Gemischbehälter unter Vakuum gesetzt wird und wobei verdampfte Flüssigkeit in einem dem Gemischbehälter nachgeschalteten Kondensator wieder verflüssigt wird.

Außerdem betrifft die Erfindung eine Vorrichtung zum Reduzieren des Flüssigkeitsgehalts von Feststoff-Flüssigkeits-Gemischen oder zum Trennen von Flüssigkeits-Gemischen mittels Verdampfens von Flüssigkeit, mit einem das Feststoff-Flüssigkeits-Gemisch oder Flüssigkeits-Gemisch aufnehmenden Gemischbehälter, mit einer Vakuumpumpe, mittels welcher der Gemischbehälter unter ein Vakuum setzbar ist und mit einem mit dem Gemischbehälter über eine Dampfleitung verbundenen Kondensator, in welchem aus dem Feststoff-Flüssigkeits-Gemisch verdampfte Flüssigkeit wieder verflüssigbar ist.

Das Dokument DE 10 2008 063 661 A1 beschreibt ein Verfahren zur thermischen Trocknung von Fest-Flüssig-Mischsystemen aus feinteiligen Feststoffen und Flüssigkeiten sowie Hilfsmitteln und Zwischenprodukten aus Vorbehandlungsschritten, wie zum Beispiel Klärschlämme, Filterschlämme, Neutralisationsschlämme, molekulardisperse Mischsysteme, feinteilige Dispersionen und ähnliches. Die Trocknung erfolgt in einem teilevakuierten Trocknungsreaktor. Das Trockengut wird dabei in direktem Kontakt mittels von flexiblen Übertragungselementen angetriebenen Fördereinrichtungen über längs versetzte, übereinander angeordnete Heizplatten beheizt, wobei das Trockengut am Ende einer Heizplatte auf die darunter liegende Platte fällt und in entgegengesetzter Richtung durch den Reaktorraum geführt wird. Der austretende Flüssigkeitsdampf wird als Brüden von einer Vakuumpumpe angesaugt, verdichtet und über die Verdampfungstemperatur hinaus erhitzt, so dass der verdichtete Brüden seine Kondensationsenergie in einem Wärmetauscher an den Heizkreislauf für die Heizplatten überträgt. Der kondensierende Brüden nimmt als Waschflüssigkeit aus dem Trockengut ausgetretene Geruchsstoffe auf. Die Vakuumpumpe ist hier bevorzugt ein Rootsgebläse, ein Schraubenverdichter, eine Flüssigkreisringpumpe oder eine Turbine.

Damit der austretende Flüssigkeitsdampf von der Vakuumpumpe über die Verdampfungstemperatur hinaus erhitzt werden kann, muss die Vakuumpumpe hier unmittelbar dem Reaktorraum nachgeschaltet sein und der Kondensator muss stromab der Vakuumpumpe liegen. Zudem muss hier die Vakuumpumpe eine relativ hohe Leistung aufweisen, um dem Flüssigkeitsdampf die für seine gewünschte Erhitzung nötige Energie per Druckerhöhung zuzuführen. Schließlich ist hier aufgrund der Führung des Trockenguts über eine Reihe von Heizplatten ein hoher mechanischer Aufwand bei der das Verfahren ausführenden Vorrichtung erforderlich.

Für die vorliegende Erfindung stellt sich daher die Aufgabe, ein Verfahren und eine Vorrichtung der eingangs genannten Art zu schaffen, welche die Nachteile des Standes der Technik vermeiden und die insbesondere eine verbesserte Energieeffizienz aufweisen sowie einen geringeren technischen Aufwand bei der Ausführung des Verfahrens erfordern.

Die Lösung des das Verfahren betreffenden Teils der Aufgabe gelingt erfindungsgemäß mit einem Verfahren der eingangs genannten Art, welches dadurch gekennzeichnet ist, dass das Vakuum in dem Gemischbehälter durch den Kondensator hindurch mittels einer flüssigkeitsgedichteten Drehkolbenpumpe erzeugt wird.

Das erfindungsgemäße Verfahren ist vorteilhaft unkompliziert und daher verhältnismäßig leicht ausführbar, bietet aber dennoch eine gute Energieeffizienz, weil durch das Vakuum im Gemischbehälter eine Verdampfung von Flüssigkeit bei niedriger Temperatur erreicht wird und weil die Drehkolbenpumpe keine große Leistung aufweisen muss, da sie nicht zur Erhitzung von Flüssigkeitsdampf eingesetzt wird.

In weiterer Ausgestaltung des Verfahrens ist vorgesehen, dass die Drehkolbenpumpe mit einer einlassseitigen Flüssigkeitsvorlage und einer auslassseitigen Flüssigkeitsvorlage betrieben wird. Hiermit wird auf technisch einfache Art und Weise die gewünschte Dichtigkeit der Drehkolbenpumpe gewährleistet.

Das im Gemischbehälter herrschende Vakuum beträgt vorzugsweise zwischen 0,6 und 0,8 bar, besonders bevorzugt 0,7 bar, kann also vorteilhaft relativ niedrig sein.

Bevorzugt wird dabei die im Kondensator entstehende Flüssigkeit der einlassseitigen Flüssigkeitsvorlage der Drehkolbenpumpe zugeführt. Hiermit wird die als Kondensat anfallende Flüssigkeit sinnvoll genutzt und es ist nur zu Beginn eines Verfahrensablaufs eine vorab erfolgende Befüllung der Flüssigkeitsvorlagen nötig.

Zur Förderung der Verdampfung von Flüssigkeit aus dem Feststoff-Flüssigkeits-Gemisch oder Flüssigkeits-Gemisch in dem Gemischbehälter wird das Feststoff-Flüssigkeits-Gemisch oder Flüssigkeits-Gemisch in dem Gemischbehälter vorzugsweise auf eine vorgebbare Temperatur erwärmt.

Die Temperatur liegt vorzugsweise zwischen 60 und 80°C, besonders bevorzugt bei 70°C.

Die Drehkolbenpumpe wird in ihrer Leistung zweckmäßig so geregelt, dass im Gemischbehälter ein vorgebbares Vakuum erzeugt und eingehalten wird und dass in der einlassseitigen Flüssigkeitsvorlage stets ein ausreichender Flüssigkeitspegel erhalten bleibt.

Bei Bedarf, insbesondere bei mangelndem Volumenstrom an Kondensat aus dem Kondensator, kann in die einlassseitige Flüssigkeitsvorlage auch über einen separaten Nachfüllanschluss Flüssigkeit nachgefüllt werden, damit stets ein ausreichender Flüssigkeitspegel in der einlassseitige Flüssigkeitsvorlage erhalten bleibt. Das gleiche gilt sinngemäß für die auslassseitige Flüssigkeitsvorlage.

Die Lösung des zweiten, die Vorrichtung betreffenden Teils der Aufgabe gelingt erfindungsgemäß mit einer Vorrichtung der eingangs genannten Art, die dadurch gekennzeichnet ist, dass die Vakuumpumpe eine flüssigkeitsgedichtete Drehkolbenpumpe ist und dass der Kondensator zwischen dem Gemischbehälter und der Drehkolbenpumpe angeordnet ist.

Mit der erfindungsgemäßen Vorrichtung kann das zuvor beschriebene erfindungsgemäße Verfahren technisch einfach und dadurch zuverlässig sowie zugleich energieeffizient ausgeführt werden.

Zur Gewährleistung der nötigen Dichtigkeit der Drehkolbenpumpe sind dieser vorzugsweise eine einlassseitige Flüssigkeitsvorlage und eine auslassseitige Flüssigkeitsvorlage zugeordnet.

Zweckmäßig ist ein Kondensatauslass des Kondensators mit der einlassseitigen Flüssigkeitsvorlage der Drehkolbenpumpe über eine Kondensatleitung verbunden, um auf diesem Weg für einen stets ausreichenden Flüssigkeitspegel in der einlassseitigen Flüssigkeitsvorlage zu sorgen.

Um in der Drehkolbenpumpe eine für eine sichere Dichtigkeit ausreichend hohen statischen Flüssigkeitsdruck zu gewährleisten, ist erfindungsgemäß weiter vorgesehen, dass die Flüssigkeitsvorlagen als von der Drehkolbenpumpe nach oben aufsteigende, großvolumige Behälter ausgeführt sind. Die Drehkolben pumpe bildet dabei demnach einen relativ zum Kondensator und zu den Flüssigkeitsvorlagen räumlich am tiefsten angeordneten Teil der Vorrichtung.

Dem Gemischbehälter ist bevorzugt eine Heizeinrichtung zugeordnet ist, mittels welcher das Feststoff-Flüssigkeits-Gemisch oder Flüssigkeits-Gemisch in dem Gemischbehälter auf eine vorgebbare Temperatur erwärmbar ist, was die Verdampfung von Flüssigkeit fördert.

Die dem Gemischbehälter zugeordnete Heizeinrichtung ist vorzugsweise mit einer erwärmten Heizflüssigkeit betreibbar, was die Heizeinrichtung technisch einfach hält.

Bei Bedarf, insbesondere in Startphasen des Betriebs der Vorrichtung, kann dem Feststoff-Flüssigkeits-Gemisch oder dem Flüssigkeits-Gemisch im Gemischbehälter zusätzliche Wärmeenergie zugeführt werden, beispielsweise über elektrische Heizelemente.

Der Kondensator ist vorzugsweise ein flüssigkeitsgekühlter Kondensator, was zu einer guten Kondensationswirkung beiträgt und auch den Kondensator technisch einfach hält.

Für die Vorrichtung ist weiterhin vorgesehen, dass der Gemischbehälter einen in seinen unteren Bereich einmündenden, absperrbaren Zulauf für das Feststoff-Flüssigkeits-Gemisch oder Flüssigkeits-Gemisch aufweist und dass der auslassseitige Vorlagebehälter der Drehkolbenpumpe an seinem oberen Endbereich einen Kondensatablauf aufweist, durch welchen Kondensat mittels der Drehkolbenpumpe abförderbar ist. In dieser Gestaltung ist ein kontinuierlicher Betrieb der Vorrichtung möglich, bis der Inhalt des Gemischbehälters so weit wie gewünscht flüssigkeitsreduziert bzw. flüssigkeitsgetrennt ist und eine Entleerung erforderlich wird. Diese Entleerung erfolgt, je nach Konsistenz des am Ende des Prozesses vorliegenden Inhalts des Gemischbehälters, entweder, bei nicht mehr fließfähiger Konsistenz, durch Ausschütten oder Auskratzen des Inhalts des Gemischbehälters oder, bei noch flüssiger Konsistenz, durch Ablassen aus einem zusätzlich am Gemischbehälter vorgesehenen Auslass oder durch dessen Zulauf und eine verstellbare Verzweigung.

Damit die Vorrichtung ganz oder teilweise automatisch arbeiten kann, ist vorgesehen, dass sie eine Steuereinheit, wenigstens einen mit der Steuereinheit verbundenen, den Druck im Gemischbehälter erfassenden Drucksensor und wenigstens einen mit der Steuereinheit verbundenen, den Flüssigkeitspegel in der einlassseitigen Flüssigkeitsvorlage der Drehkolbenpumpe erfassenden Flüssigkeitspegelsensor aufweist und dass mittels der Steuereinheit nach Maßgabe von durch die Sensoren übermittelten Messwerten die Drehkolbenpumpe in ihrer Leistung so regelbar ist, dass im Gemischbehälter ein vorgebbares Vakuum erzeugbar und einhaltbar ist und in der einlassseitigen Flüssigkeitsvorlage stets ein ausreichender Flüssigkeitspegel beibehaltbar ist.

Weitere Sensoren, die Messwerte an die Steuereinheit liefern, können bei Bedarf vorgesehen sein, wie ein oder mehrere Temperatursensoren im Gemischbehälter und/oder in der Dampfleitung und/oder in der Kondensatleitung und/oder ein Pegelstandssensor im Gemischbehälter.

Im Folgenden wird ein Ausführungsbeispiel der Erfindung anhand einer Zeichnung erläutert. Die Figuren der Zeichnung zeigen:
- Figur 1: eine Vorrichtung in einer schematischen Ansicht und
- Figur 2: eine Drehkolbenpumpe mit Flüssigkeitsvorlagen, als Teil der Vorrichtung aus Figur 1, in gleicher An-sicht wie in Figur 1.

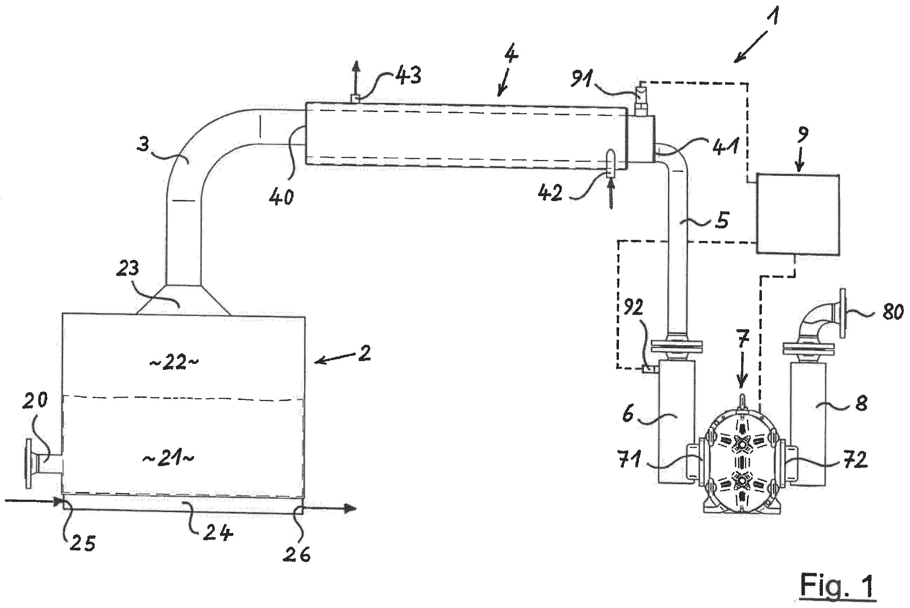

Die Figur 1 der Zeichnung zeigt eine Vorrichtung 1 in einer schematischen Ansicht. Die Vorrichtung 1 dient zum Reduzieren des Flüssigkeitsgehalts von Feststoff-Flüssigkeits-Gemischen oder zum Trennen von Flüssigkeits-Gemischen, die einem Gemischbehälter 2 über einen absperrbaren Zulauf 20 zuführbar sind und die einen unteren Bereich des Gemischbehälters 2 ausfüllen. Ein oberer Bereich 22 des Inneren des Gemischbehälters 2 bildet einen Dampfraum.

Das Reduzieren des Flüssigkeitsgehalts des Feststoff-Flüssigkeits-Gemisches bzw. das Trennen von Flüssigkeiten mit unterschiedlichen Siedetemperaturen erfolgt durch Verdampfen von Flüssigkeit aus dem Gemischbehälter 2 bei abgesperrtem Zulauf 20 mittels Vakuum.

Das Vakuum ist hier mittels einer Vakuumpumpe in Form einer flüssigkeitsgedichteten Drehkolbenpumpe 7 erzeugbar.

Der Gemischbehälter 2 hat an seiner Oberseite einen Dampfauslass 23, an den eine Dampfleitung 3 angeschlossen ist, die zum Dampfeinlass 40 eines oben in Figur 1 liegenden Kondensators 4 führt. In dem Kondensator 4 ist aus dem Feststoff-Flüssigkeits-Gemisch oder Flüssigkeits-Gemisch verdampfte Flüssigkeit wieder verflüssigbar.

Der Kondensator 4 ist hier ein flüssigkeitsgekühlter Kondensator, dem eine kühle Kühlflüssigkeit über einen Kühlflüssigkeitseinlass 42 zuführbar ist. Über einen Kühlflüssigkeitsauslass 43 wird die im Kondensator erwärmte Kühlflüssigkeit abgeführt .

Von einem Kondensatauslass 41 des Kondensators 4 führt eine Kondensatleitung 5 abwärts in eine einlassseitige Flüssigkeitsvorlage 6 der Drehkolbenpumpe 7. Der Kondensator 4 liegt hier also in Strömungsrichtung von Dampf und Kondensat gesehen zwischen dem Gemischbehälter 2 und der Drehkolbenpumpe 7. Der Kondensator 4 ist in einer Position räumlich oberhalb der Drehkolbenpumpe 7 und deren einlassseitiger Flüssigkeitsvorlage 6 angeordnet, sodass das im Kondensator 4 im Betrieb der Vorrichtung 1 entstehende Kondensat mittels natürlichen Gefälles durch die Kondensatleitung 5 in die einlassseitige Flüssigkeitsvorlage 6 fließt.

Weiterhin ist der Drehkolbenpumpe 7 eine auslassseitige Flüssigkeitsvorlage 8 zugeordnet. Beide Flüssigkeitsvorlagen 6, 8 sind im Betrieb der Vorrichtung 1 mit Flüssigkeit, hier Kondensat aus dem Kondensator 4, gefüllt, um die erwähnte Flüssigkeitsdichtung der Drehkolbenpumpe 7 zu bilden.

Die einlassseitige Flüssigkeitsvorlage 6 ist mit einem Einlass 71 der Drehkolbenpumpe 7 strömungsmäßig verbunden und die auslassseitige Flüssigkeitsvorlage 8 ist mit einem Auslass 72 der Drehkolbenpumpe 7 strömungsmäßig verbunden.

Die Flüssigkeitsvorlagen 6, 8 sind als von der Drehkolbenpumpe 7 nach oben aufsteigende, großvolumige Behälter ausgeführt.

Dem Gemischbehälter 2 ist hier eine Heizeinrichtung 24 zugeordnet, mittels welcher das Feststoff-Flüssigkeits-Gemisch oder Flüssigkeits-Gemisch in dem Gemischbehälter 2 auf eine vorgebbare Temperatur erwärmbar ist. Dabei ist die dem Gemischbehälter 2 zugeordnete Heizeinrichtung 24 hier mit einer erwärmten Heizflüssigkeit betreibbar. Die erwärmte Heizflüssigkeit ist durch einen Heizflüssigkeitseinlass 25 der Heizeinrichtung 24 zuführbar und die in der Heizeinrichtung 24 abgekühlte Heizflüssigkeit ist durch einen Heizflüssigkeitsauslass 26 der Heizeinrichtung 24 aus dieser abführbar.

Das Feststoff-Flüssigkeits-Gemisch oder Flüssigkeits-Gemisch im Gemischbehälter 2 wird durch die Heizeinrichtung 24 beispielsweise auf eine Temperatur von etwa 70°C aufgeheizt, was in Verbindung mit dem Vakuum eine wirksame Verdampfung von Flüssigkeit bewirkt.

Zur Förderung der Kühlflüssigkeit für den Kondensator 4 und der Heizflüssigkeit für die Heizeinrichtung 24 dienen zweckmäßig in der Zeichnung nicht eigens dargestellte Flüssigkeitspumpen.

Der auslassseitige Vorlagebehälter 8 der Drehkolbenpumpe 7 weist an seinem oberen Ende einen Kondensatablauf 80 auf, durch welchen überschüssiges, nicht für die Befüllung und Erhaltung der Flüssigkeitspegel in den Flüssigkeitsvorlagen 6, 8 benötigtes Kondensat mittels der Drehkolbenpumpe 7 abförderbar und einer weiteren Verwendung zuführbar oder entsorgbar ist.

Weiterhin weist die als Ausführungsbeispiel dargestellte Vorrichtung 1 eine Steuereinheit 9, wie SPS-Steuerung, wenigstens einen mit der Steuereinheit 9 verbundenen, den Druck im Gemischbehälter 2 erfassenden Drucksensor 91 und wenigstens einen mit der Steuereinheit 9 verbundenen, den Flüssigkeitspegel in der einlassseitigen Flüssigkeitsvorlage 6 der Drehkolbenpumpe 7 erfassenden Flüssigkeitspegelsensor 92 auf.

Der Drucksensor 91 ist hier am Kondensatauslass 41 des Kondensators 4 angeordnet. Da der Druck im oberen, den Dampfraum bildenden Bereich 22 des Gemischbehälters 2, in der Dampfleitung 3, im Kondensator 4 und in der Kondensatleitung 5 gleich ist, kann der Drucksensor 91 an einem der genannten Elemente der Vorrichtung 1 angeordnet sein.

Die Sensoren 91, 92 sind beispielsweise mittels in Figur 1 gestrichelt dargestellter elektrischer Signalleitungen an die Steuereinheit 9 angeschlossen.

Mittels der Steuereinheit 9 und eines darin hinterlegten digitalen Steuerprogramms ist nach Maßgabe von durch die Sensoren 91, 92 übermittelten Messwerten die Drehkolbenpumpe 7 in ihrer Leistung so regelbar, dass im Gemischbehälter 2 ein vorgebbares Vakuum, z. B. von etwa 0,7 bar, erzeugt und eingehalten wird und in der einlassseitigen Flüssigkeitsvorlage 6 stets ein ausreichend hoher Flüssigkeitspegel beibehalten wird.

Im Betrieb der Vorrichtung 1 wird dem Gemischbehälter 2 durch dessen geöffneten Zulauf 20 zunächst zu behandelndes Feststoff-Flüssigkeits-Gemisch oder Flüssigkeits-Gemisch zugeführt und nach Erreichen einer vorgebbaren Füllmenge wird der Zulauf 20 abgesperrt.

Mittels der Drehkolbenpumpe 7 wird im Gemischbehälter 2 ein Vakuum erzeugt. Dazu wird die Drehkolbenpumpe 7 langsam in Betrieb genommen und nach zunehmendem Unterdruck, z. B. bei ca. 0,7 bar, fängt die Flüssigkeit, die z. B. Wasser ist, an zu verdampfen.

Die Flüssigkeitsverdampfung kann mittels einer Erwärmung des Feststoff-Flüssigkeits-Gemisches oder Flüssigkeits-Gemisches im Gemischbehälter 2 durch die Heizeinrichtung 24 verstärkt werden.

Der entstehende Dampf wird aus dem den Dampfraum bildenden oberen Bereich 22 des Gemischbehälters 2 durch die Dampfleitung 3 zum Kondensator 4 geführt und dort kondensiert. Das Kondensat fließt dann durch die Kondensatleitung 5 in die einlassseitige Flüssigkeitsvorlage 6 der Drehkolbenpumpe 7. Wenn eine gewünschte Flüssigkeitsreduzierung bzw. Flüssigkeitstrennung des im Gemischbehälter 2 verbleibenden Mediums erreicht ist, wird die Drehkolbenpumpe 7 ausgeschaltet und der Gemischbehälter 2 wird belüftet und dann entleert. Danach kann ein neuer Behandlungszyklus starten.

Da das Volumen des Feststoff-Flüssigkeits-Gemisches oder Flüssigkeits-Gemisches im Gemischbehälter 2 infolge des Verdampfens von Flüssigkeit daraus stetig kleiner wird, kann auch ein stetiges Nachfüllen von Feststoff-Flüssigkeits-Gemisch oder Flüssigkeits-Gemisch in den Gemischbehälter 2 erfolgen, bis eine Entleerung des Gemischbehälters 2 erforderlich wird.

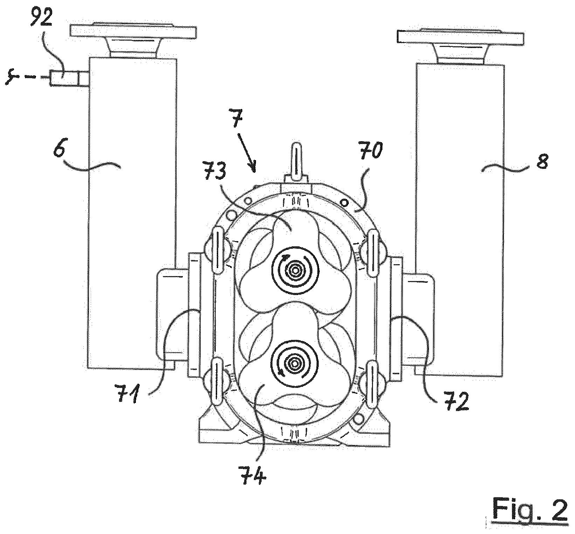

Figur 2 zeigt die Drehkolbenpumpe 7 mit den Flüssigkeitsvorlagen 6, 8 als Teil der Vorrichtung 1 aus Figur 1, in gleicher Ansicht wie in Figur 1, nun aber mit einem entfernten oder "durchsichtigen" Gehäusedeckel des Pumpengehäuses 70.

Links in Figur 2 ist die einlassseitige Flüssigkeitsvorlage 6 sichtbar, die die Form eines relativ hohen, vertikal ausgerichteten Behälters hat. Nahe dem oberen Ende der einlassseitigen Flüssigkeitsvorlage 6 ist der Flüssigkeitspegelsensor 92 angeordnet. In ihrem unteren Bereich ist die einlassseitige Flüssigkeitsvorlage 6 mit dem Einlass 71 der Drehkolbenpumpe 7 strömungsmäßig verbunden. An das obere Ende der einlassseitigen Flüssigkeitsvorlage 6 ist die in Figur 1 dargestellte Kondensatleitung 5 anschließbar.

Die Drehkolbenpumpe 7 ist von an sich bekannter Bauart und besitzt ein Pumpengehäuse 70 mit einem in Querschnitt gesehen ovalen Innenraum, in welchem zwei gegensinnig drehbare, ineinandergreifende Drehkolben 73, 74 angeordnet sind. Ein hier hinter der Drehkolbenpumpe 7 liegender und deshalb nicht sichtbarer Antrieb, wie Elektromotor, dient zum Drehen der Drehkolben.

Rechts in Figur 2 ist die auslassseitige Flüssigkeitsvorlage 8 sichtbar, die ebenfalls die Form eines relativ hohen, vertikal ausgerichteten Behälters hat. In ihrem unteren Bereich ist die auslassseitige Flüssigkeitsvorlage 8 mit dem Auslass 72 der Drehkolbenpumpe 7 strömungsmäßig verbunden. An das obere Ende der auslassseitigen Flüssigkeitsvorlage 8 ist der in Figur 1 dargestellte Kondensatablauf 80 anschließbar.

Die Vorrichtung gemäß Erfindung ist auf vielen Gebieten einsetzbar, beispielsweise in Biogasanlagen zu Reduzierung des Flüssigkeitsgehalts von Gärresten oder in industriellen Kochanlagen.

**Bezugszeichenliste:**

| Zeichen | Bezeichnung |
|---|---|
| 1 | Vorrichtung |
| 2 | Gemischbehälter |
| 20 | Zulauf an 2 |
| 21 | unterer Bereich von 2 |
| 22 | oberer Bereich von 2 |
| 23 | Dampfauslass an 2 |
| 24 | Heizeinrichtung an 2 |
| 25 | Heizflüssigkeitseinlass an 24 |
| 26 | Heizflüssigkeitsauslass an 24 |
| 3 | Dampfleitung von 2 nach 4 |
| 4 | Kondensator |
| 40 | Dampfeinlass an 4 |
| 41 | Kondensatauslass an 4 |
| 42 | Kühlflüssigkeitseinlass an 4 |
| 43 | Kühlflüssigkeitsauslass an 4 |
| 5 | Kondensatleitung von 4 nach 6 |
| 6 | einlassseitige Flüssigkeitsvorlage |
| 7 | Drehkolbenpumpe |
| 70 | Pumpengehäuse |
| 71 | Einlass in 70 |
| 72 | Auslass aus 70 |
| 73, 74 | Drehkolben in 7 |
| 8 | auslassseitige Flüssigkeitsvorlage |
| 80 | Kondensatablauf |
| 91 | Drucksensor |
| 92 | Flüssigkeitspegelsensor |

## Patentansprüche

1. Verfahren zum Reduzieren des Flüssigkeitsgehalts von Feststoff-Flüssigkeits-Gemischen oder zum Trennen von Flüssigkeits-Gemischen mittels Verdampfens von Flüssigkeit, wobei das Feststoff-Flüssigkeits-Gemisch oder Flüssigkeits-Gemisch in einem Gemischbehälter (2) unter Vakuum gesetzt wird und wobei verdampfte Flüssigkeit in einem dem Gemischbehälter (2) nachgeschalteten Kondensator (4) wieder verflüssigt wird,
**dadurch gekennzeichnet,**
**dass** das Vakuum in dem Gemischbehälter (2) durch den Kondensator (4) hindurch mittels einer flüssigkeitsgedichteten Drehkolbenpumpe (7) erzeugt wird.

2. Verfahren nach Anspruch 1, **dadurch gekennzeichnet, dass** die Drehkolbenpumpe (7) mit einer einlassseitigen Flüssigkeitsvorlage (6) und einer auslassseitigen Flüssigkeitsvorlage (8) betrieben wird.

3. Verfahren nach Anspruch 2, **dadurch gekennzeichnet, dass** die im Kondensator (4) entstehende Flüssigkeit der einlassseitigen Flüssigkeitsvorlage (6) der Drehkolbenpumpe (7) zugeführt wird.

4. Verfahren nach einem der Ansprüche 1 bis 3, **dadurch gekennzeichnet, dass** das Feststoff-Flüssigkeits-Gemisch oder Flüssigkeits-Gemisch in dem Gemischbehälter (2) auf eine vorgebbare Temperatur erwärmt wird.

5. Verfahren nach einem der Ansprüche 1 bis 4, **dadurch gekennzeichnet, dass** die Drehkolbenpumpe (7) in ihrer Leistung so geregelt wird, dass im Gemischbehälter (2) ein vorgebbares Vakuum erzeugt und eingehalten wird und dass in der einlassseitigen Flüssigkeitsvorlage (6) stets ein ausreichender Flüssigkeitspegel erhalten bleibt.

6. Vorrichtung (1) zum Reduzieren des Flüssigkeitsgehalts von Feststoff-Flüssigkeits-Gemischen oder zum Trennen von Flüssigkeits-Gemischen mittels Verdampfens von Flüssigkeit, mit einem das Feststoff-Flüssigkeits-Gemisch oder Flüssigkeits-Gemisch aufnehmenden Gemischbehälter (2), mit einer Vakuumpumpe, mittels welcher der Gemischbehälter (2) unter ein Vakuum setzbar ist, und mit einem mit dem Gemischbehälter (2) über eine Dampfleitung (3) verbundenen Kondensator (4), in welchem aus dem Feststoff-Flüssigkeits-Gemisch oder Flüssigkeits-Gemisch verdampfte Flüssigkeit wieder verflüssigbar ist,
**dadurch gekennzeichnet,**
**dass** die Vakuumpumpe eine flüssigkeitsgedichtete Drehkolbenpumpe (7) ist und dass der Kondensator (4) zwischen dem Gemischbehälter (2) und der Drehkolbenpumpe (7) angeordnet ist.

7. Vorrichtung (1) nach Anspruch 6, **dadurch gekennzeichnet, dass** der Drehkolbenpumpe (7) eine einlassseitige Flüssigkeitsvorlage (6) und eine auslassseitige Flüssigkeitsvorlage (8) zugeordnet sind.

8. Vorrichtung (1) nach Anspruch 7, **dadurch gekennzeichnet, dass** ein Kondensatauslass (41) des Kondensators (4) mit der einlassseitigen Flüssigkeitsvorlage (6) der Drehkolbenpumpe (7) über eine Kondensatleitung (5) verbunden ist.

9. Vorrichtung (1) nach Anspruch 7 oder 8, **dadurch gekennzeichnet, dass** die Flüssigkeitsvorlagen (6, 8) als von der Drehkolbenpumpe (7) nach oben aufsteigende, großvolumige Behälter ausgeführt sind.

10. Vorrichtung (1) nach einem der Ansprüche 6 bis 9, **dadurch gekennzeichnet, dass** dem Gemischbehälter (2) eine Heizeinrichtung (24) zugeordnet ist, mittels welcher das Feststoff-Flüssigkeits-Gemisch oder Flüssigkeits-Gemisch in dem Gemischbehälter (2) auf eine vorgebbare Temperatur erwärmbar ist.

11. Vorrichtung (1) nach Anspruch 10, **dadurch gekennzeichnet, dass** die dem Gemischbehälter (2) zugeordnete Heizeinrichtung (24) mit einer erwärmten Heizflüssigkeit betreibbar ist.

12. Vorrichtung (1) nach einem der Ansprüche 6 bis 11, **dadurch gekennzeichnet, dass** der Kondensator (4) ein flüssigkeitsgekühlter Kondensator ist.

13. Vorrichtung (1) nach einem der Ansprüche 6 bis 12, **dadurch gekennzeichnet, dass** der Gemischbehälter (2) einen in seinen unteren Bereich (21) einmündenden absperrbaren Zulauf (20) für das Feststoff-Flüssigkeits-Gemisch oder Flüssigkeits-Gemisch aufweist und dass der auslassseitige Vorlagebehälter (8) der Drehkolbenpumpe (7) an seinem oberen Endbereich einen Kondensatablauf (80) aufweist, durch welchen Kondensat mittels der Drehkolbenpumpe (7) abförderbar ist.

14. Vorrichtung (1) nach einem der Ansprüche 6 bis 13,
**dadurch gekennzeichnet, dass** die Vorrichtung (1) eine Steuereinheit (9), wenigstens einen mit der Steuereinheit (9) verbundenen, den Druck im Gemischbehälter (2) erfassenden Drucksensor (91) und wenigstens einen mit der Steuereinheit (9) verbundenen, den Flüssigkeitspegel in der einlassseitigen Flüssigkeitsvorlage (6) der Drehkolbenpumpe (7) erfassenden Flüssigkeitspegelsensor (92) aufweist und dass mittels der Steuereinheit (9) nach Maßgabe von durch die Sensoren (91, 92) übermittelten Messwerten die Drehkolbenpumpe (7) in ihrer Leistung so regelbar ist, dass im Gemischbehälter (2) ein vorgebbares Vakuum erzeugbar und einhaltbar ist und in der einlassseitigen Flüssigkeitsvorlage (6) stets ein ausreichender Flüssigkeitspegel beibehaltbar ist.
